# EUROPÄISCHE PATENTSCHRIFT

(11) **EP 0 682 777 B1**
(45) Veröffentlichungstag und Bekanntmachung des Hinweises auf die Patenterteilung: **23.07.1997**
(21) Anmeldenummer: 94906840.7
(22) Anmeldetag: 01.02.1994
(51) Int. Cl.: G02B 6/38, G02B 6/44, H01R 13/56, H02G 1/14

(54) **AUFNAHMEANORDNUNG FÜR EIN KABEL-ENDSTÜCK**
RECEPTACLE FOR A CABLE END PIECE
LOGEMENT POUR TERMINAISONS DE CABLES

(30) Priorität: 03.02.1993 DE 4303737
(43) Veröffentlichungstag der Anmeldung: 22.11.1995
(73) Patentinhaber: SIEMENS AKTIENGESELLSCHAFT, 80333 München (DE)
(72) Erfinder: GÜNTHER, Uwe, D-13057 Berlin (DE); WEIGEL, Hans-Dieter, D-10405 Berlin (DE)
(86) Internationale Anmeldenummer: DE9400118
(87) Internationale Veröffentlichungsnummer: WO9418585

(56) Entgegenhaltungen:
- EP-A- 0 199 267
- DE-A- 3 820 950
- GB-A- 2 030 723
- PATENT ABSTRACTS OF JAPAN vol. 7, no. 82 (P-189) (1227) 22. Januar 1983 & JP,A,58 011 906 (FURUKAWA DENKI)

## Beschreibung

Die Erfindung betrifft eine Aufnahmeanordnung für ein Kabel-Endstück, dessen Kabelmantel unter Freigabe mindestens eines Signalleiters, insbesondere eines Lichtwellenleiters, und dem Ende einer Zugentlastung endseitig teilweise entfernt ist,
- mit einem Behälter mit einer Eintrittsöffnung, in die das Kabel-Endstück eingeführt ist, und mit einer Austrittsöffnung, durch die zumindest der Signalleiter austritt,
- und mit in den Behälter eingebrachter Vergußmasse, die den Signalleiter, die Enden der Zugentlastung und den Kabelmantel umgibt.

Zum Schutz von Kabelverbindungen gegen äußere Zugbelastungen ist es bekannt (US-PS 4,319,802; US-PS 4,447,120), Kabel-Endstücke von dem Kabelmantel zu befreien und das Ende einer in dem Kabel enthaltenen Zugentlastung durch Crimpen (beispielsweise auf einer Metallhülse) festzulegen. Der Signalleiter, insbesondere knickempfindliche Lichtwellenleiter, ist jedoch dabei weiterhin äußeren Schubbeeinflussungen ausgesetzt. Die Crimpung kann eine homogene Kraftleitung nicht gewährleisten; vielmehr übertragen insbesondere bei einer faserförmigen Zugentlastung einige Fasern einen überproportionalen Anteil der Kräfte. Der Kabelmantel ist gesondert gegen torsionsbedingte Drehungen zu sichern.

Aus der US-PS 4,984,865 ist eine Aufnahmeanordnung für ein Kabel-Endstück bekannt, dessen Kabelmantel unter Freigabe eines Lichtwellenleiterendes und den Enden einer strangförmigen Zugentlastung (Aramid-Fasern) endseitig teilweise entfernt ist. Das Endstück ist in ein Steckverbindergehäuse eingeführt, in das ein Thermoplast eingebracht ist. Eine bei hohen Zugkräften sichere Festlegung des Kabelmantels und eine symmetrische Verteilung der Fasern ist bei der bekannten Aufnahmeanordnung nicht gewährleistet; es besteht die Gefahr, daß die Fasern beim Einspritzen oder Anschmelzen des in Granulatform eingebrachten Thermoplasten unkontrolliert zusammenfallen.

Die DE-OS-38 20 950 beschreibt eine Aufnahmeanordnung der eingangs genannten Art, die hinsichtlich der Problematik der symmetrischen Festlegung der Zugentlastung verbessert ist. Das unter Freigabe eines Lichtwellenleiters und den Enden einer strangförmigen Zugentlastung (Aramid-Fasern) endseitig teilweise vom Kabelmantel befreite Kabel-Endstück ist durch eine Eintrittsöffnung in einen Behälter eingeführt. Der Lichtwellenleiter tritt aus einer Austrittsöffnung des Behälters aus. Nach Einführen des Kabel-Endstücks wird ein spritzbarer, erhärtender oder erhärtbarer Werkstoff in flüssiger Form vor den freiliegenden Enden der Fasern in den Behälter eingespritzt. Die Herstellung dieser bekannten Aufnahmeanordnung ist verhältnismäßig aufwendig, da eine Spritzgußmaschine erforderlich ist. Der mit etwa 200 °C eingespritzte Werkstoff stellt für den temperaturempfindlichen Lichtwellenleiter eine starke thermische Belastung dar. Das mit dem Einspritzen angestrebte schirmartige Aufwehen der Zugentlastungsenden ist in der Praxis nicht immer gewährleistet; eine inhomogene Kraftverteilung auf die Zugentlastungsenden kann zum Reißen einzelner Zugentlastungsfasern führen.

Bei der bekannten Aufnahmeanordnung ist der Kabelmantel gegenüber dem Behälter nicht verdrehsicher gelagert. Eine besondere Gefahr bei Zugeinwirkung auf den Mantel besteht darin, daß der Mantel vergleichsweise einfach aus dem Vergußwerkstoff herausziehbar ist. In der DE-OS-38 20 950 ist ein Knickschutz (Einhaltung von Mindestbiegeradien) für das Kabel-Endstück nicht angesprochen.

Die Aufgabe der Erfindung besteht daher in der Schaffung einer Aufnahmeanordnung mit einem möglichst umfassenden Schutz des Kabel-Endstücks und des Signalleiters vor äußeren Belastungen, insbesondere vor Zug- Schub- und Torsionsbelastungen.

Diese Aufgabe wird erfindungsgemäß bei einer Aufnahmeanordnung der eingangs genannten Art durch die Merkmale der Anspruchs 1 gelöst.

Ein wesentlicher Vorteil der Erfindung ist darin zu sehen, daß neben dem Behälter nur ein weiteres, äußerst preiswertes Bauteil (Spreizkörper) notwendig ist, um der erfindungsgemäßen Aufnahmeanordnung im Vergleich zu der aus der DE-OS-38 20 950 bekannten Aufnahmeanordnung eine äußerst hohe Widerstandsfähigkeit gegen äußere Belastungen zu verleihen. Der Spreizkörper weitet den Kabelmantel so, daß dessen Querschnitt zumindest an einer Stelle größer als der Eintrittsöffnungs-Querschnitt ist; dadurch ist das Kabelmantelende auch bei hohen Zugkräften in dem Behälter sicher festgelegt. Der Spreizkörper fächert die Zugentlastungsenden in einem vorgegebenen Winkel von der Kabelachse gleichförmig auf. Nach Aushärtung der Vergußmasse tragen die einzelnen Enden der Zugentlastung gleichförmig zur Kraftübertragung bei. Die Vergußmasse ist daher - im Gegensatz zu der Vergußmasse bei der bekannten Aufnahmeanordnung (DE-OS-38 20 950) - allein hinsichtlich ihrer Fixierungswirkung optimierbar. Bevorzugt ist der Spreizkörper hülsenartig (als Spreizhülse) ausgebildet.

Eine bevorzugte Ausgestaltung der Erfindung sieht vor, daß die Vergußmasse ein lichtaktivierbares oder lichthärtbares Harzsystem ist. Derartige bekannte Harzsysteme (z. B. das unter dem Handelsnamen DELO-DFA939 der Fa. DELO bekannte lichtaktivierbare oder das unter dem Handelsnamen LCR0607 der Fa. ICI bekannte lichthärtbare Harzsystem) erlauben eine gezielte Aktivierung des Verguß-Materials. Das lichtaktivierbare Harzsystem kann zur Aktivierung an einer Lichtquelle vorbeigeführt und anschließend in den Behälter eingebracht werden, wo die aktivierte Polymerisation stattfindet. Diese Harzsysteme härten äußerst schnell aus, so daß die Fertigungstaktzeiten erheblich verkürzt werden können. Diese Harzsysteme und auch Zwei-Komponenten-Epoxi-Harze können besonders vorteilhaft bei der Feldmontage verwendet werden.

Um bei Verwendung lichtaktivierbarer oder lichthärtbarer Harzsysteme eine besonders gute, allseitige Aushärtung zu erreichen, ist bevorzugt vorgesehen, daß der Behälter aus transparentem Material besteht. In diesem Zusammenhang ist es für die Aushärtung des signalleiternahen Harzmaterials vorteilhaft, wenn die Spreizhülse aus transparentem Material besteht.

Eine hinsichtlich der Festlegung mehrerer Signalleiter vorteilhafte Ausgestaltung der Aufnahmeanordnung sieht vor, daß der Spreizkörper (die Spreizhülse) einen innen im wesentlichen ovalen Hohlquerschnitt aufweist.

Um die Verdrehsicherheit des Kabelmantels relativ zum Behälter weiter zu erhöhen, sieht eine vorteilhafte Ausgestaltung der Erfindung vor, daß die Eintrittsöffnung eine profilierte, vorzugsweise gezahnte, Innen-Kontur aufweist, die sich in das Material des Kabelmantels eindrückt.

Um eine Festlegung auch gegen auf den Mantel einwirkende äußere Schubkräfte zu ermöglichen, sieht eine vorteilhafte Weiterbildung der Erfindung vor, daß zumindest eine in Axialrichtung des Kabel-Endstücks verlaufende Behälterinnenwand aufgerauht und/oder profiliert ist.

Eine weitere vorteilhafte Fortbildung der Erfindung besteht darin, daß die Eintrittsöffnung von einer Knickschutztülle umgeben ist, die sich von der Eintrittsöffnung des Behälters wegerstreckt und die integraler Bestandteil des Behälters ist. Dadurch ist für einen ausreichenden Knickschutz des Kabel-Endstücks kein zusätzlich zu handhabendes Bauteil erforderlich. Die Knickschutzhülle kann im Gegensatz zum übrigen Behälter aus einem nichttransparenten und elastischen Material bestehen, indem der Behälter beispielsweise ein Zwei-Komponenten-Kunststoffteil ist.

Die Erfindung wird nachfolgend anhand einer Zeichnung beispielhaft näher erläutert. Es zeigen:
Figur 1 einen Schnitt durch eine erfindungsgemäße Aufnahmeanordnung,
Figur 2 eine Ansicht der Aufnahmeanordnung gemäß Figur 1,
Figur 3 einen Duplex-Stecker mit einer Aufnahmeanordnung und
Figur 4 einen Duplex-Stecker mit einem zweiten Ausführungsbeispiel einer erfindungsgemäßen Aufnahmeanordnung.

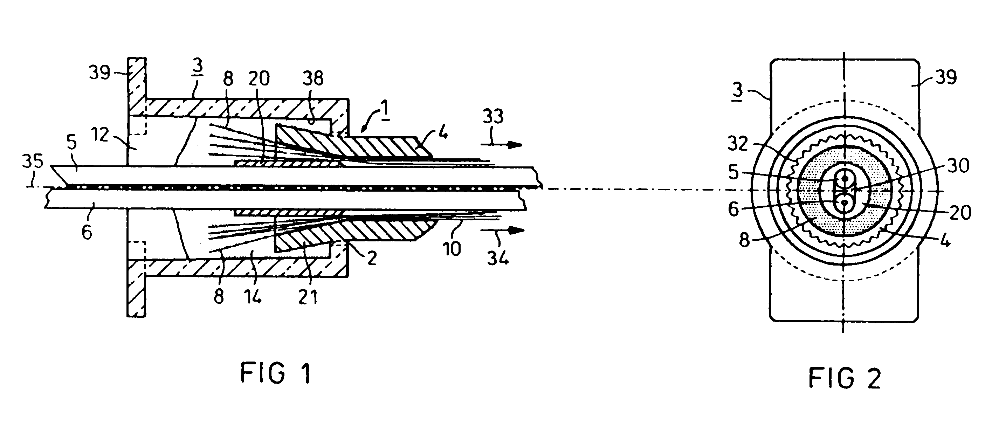

Figur 1 zeigt eine Aufnahmeanordnung für ein Kabel-Endstück 1, das in eine Eintrittsöffnung 2 eines topfförmigen, zylindrischen Behälters 3 eingeführt ist. Der Kabelmantel 4 des Kabel-Endstücks 1 ist im vorderen Bereich entfernt, so daß Signalleiter 5, 6 in Form von Lichtwellenleitern und Enden 8 strangförmiger Zugentlastungselemente 10 (Aramid-Fasern) frei sind. Der Behälter hat eine mit der Eintrittsöffnung 2 fluchtende Austrittsöffnung 12, aus der die Signalleiter 5, 6 austreten. In den Behälter ist eine Vergußmasse 14 eingebracht, die vorzugsweise aus einem ausgehärteten Zwei-Komponenten-Epoxiharz oder einem lichtaktivierbaren und/oder lichtaushärtbaren Harzsystem besteht. Die Vergußmasse 14 umgibt die Signalleiter 5, 6, die Enden 8 der Zugentlastungselemente 10 und den Kabelmantel 4. Von den freien Enden der Signalleiter 5, 6 her ist ein hülsenartiger Spreizkörper (Spreizhülse) 20 unter Auffächerung der Enden 8 der Zugentlastungselemente 10 teilweise in das Ende 21 des Kabelmantels 4 eingeführt. Die Spreizhülse 20 ist so bemessen, daß sie den Kabelmantel 4 über den Querschnitt der Eintrittsöffnung 2 hinaus aufweitet. Der Behälter 3 besteht aus transparentem Material, wenn ein lichthärtbares Harzsystem als Vergußmasse 14 verwendet wird. In diesem Fall kann die Vergußmasse 14 allseitig Lichteinstrahlung zur Beschleunigung der Aushärtung ausgesetzt werden. Vorzugsweise besteht dann auch die Spreizhülse 20 aus einem transparentem Material, so daß auch die zwischen Spreizhülse und Signalleiter 5, 6 befindliche Vergußmasse schnell und vollständig aushärtet.

Figur 2 zeigt in stirnseitiger Ansicht unter teilweiser Weglassung der Vergußmasse 14 eine ovale Ausgestaltung des Hohlquerschnitts 30 der Spreizhülse 20. Die Enden 8 der Zugentlastungsfasern sind gleichmäßig in der Vergußmasse 14 aufgefächert enthalten und gewährleisten so eine homogene Aufnahme von Zugkräften. Die Eintrittsöffnung 2 hat eine gezahnte Innenkontur 32, die sich in das Material des Kabelmantels 4 eindrückt. Dazu kann während der Montage nach Einbringen der Spreizhülse 20 ein leichter Zug auf dem Kabelmantel 4 in Richtung der Pfeile 33, 34 (Figur 1) ausgeübt werden.

Die in Axialrichtung 35 des Kabel-Endstücks 1 verlaufende Behälterinnenwand 38 ist aufgerauht oder profiliert, um auf den Kabelmantel 4 wirkende Schubkräfte aufnehmen zu können. Ein Flansch 39 dient zur verdrehsicheren, axialfixierten Festlegung des Behälters 3.

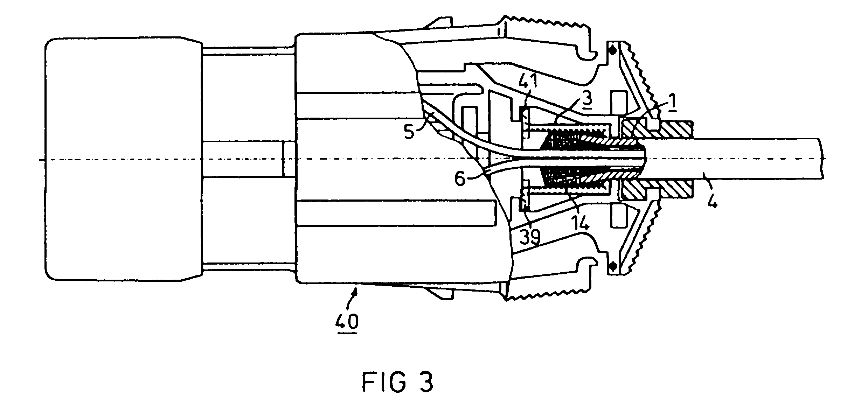

Figur 3 zeigt die in den Figuren 1 und 2 dargestellte Aufnahmeanordnung, die in ein Duplex-Steckergehäuse 40 eingesetzt ist. Die Aufnahmeanordnung ist mit ihrem Flansch 39 in entsprechenden Ausnehmungen 41 des Gehäuses 40 fixiert, so daß das Kabel-Endstück 1 gegenüber dem Gehäuse 40 verdrehsicher fixiert ist. Selbstverständlich kann die Aufnahmeanordnung auch z B. in einen Simplex-Stecker, in ein Gerätegehäuse oder in einen Verteiler eingesetzt werden.

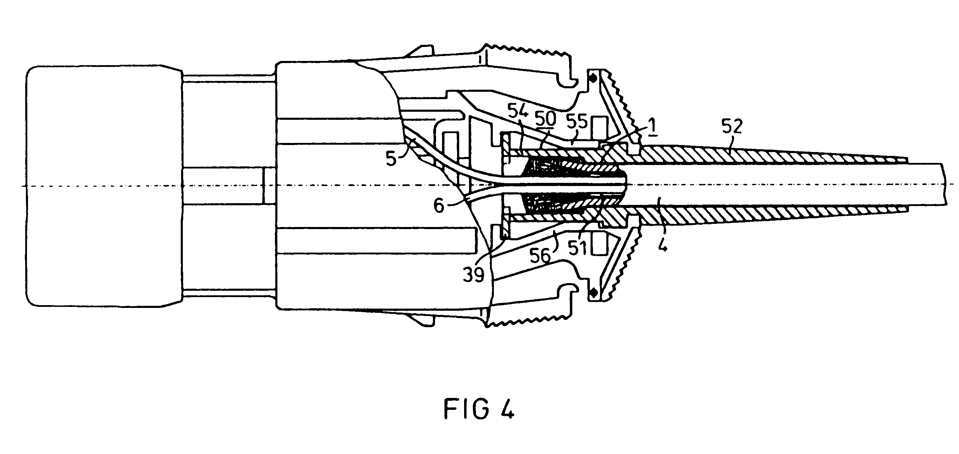

Figur 4 zeigt eine alternative Ausgestaltung einer erfindungsgemäßen Aufnahmeanordnung, wobei in den Figuren 1 und 2 bereits gezeigte, entsprechende Elemente mit denselben Bezugszeichen versehen sind. Das Kabel-Endstück 1, dessen Kabelmantel 4 teilweise entfernt ist, ist von einem Behälter 50 aufgenommen, dessen Eintrittsöffnung 51 von einer sich wegerstreckenden Knickschutztülle 52 umgeben ist. Die Knickschutztülle 52 ist integraler Bestandteil des Behälters 50. Der Behälter 50 kann aus einem Zwei-Komponenten-Kunststoffteil bestehen, so daß der vordere Aufnahmebereich 54 hinsichtlich seiner Festigkeit und der Bereich der Knickschutztülle 52 hinsichtlich seiner Nachgiebigkeit unabhängig optimierbar sind. Wenn der Behälter 50 aus einem homogenen, elastischen Material besteht, können in dem Gehäuse entsprechende Stege 55, 56 vorgesehen sein, die den Bereich 54 des Behälters gegen ein Herausziehen sichern.

Mit der vorliegenden Erfindung wird ein Kabel-Endstück mit einem geringen Bedarf an Einzelteilen in fertigungstechnisch einfacher Weise unter zuverlässiger Aufnahme von Zug-Kräften, Schubkräften und Torsionsbelastungen bei gleichzeitiger Axialfixierung der Signalleiter und einem Knickschutz des Kabelmantels festgelegt.

## Patentansprüche

1. Aufnahmeanordnung mit einem Kabel-Endstück (1) das aus mindestens einem Signalleiter (5,6), insbesondere einem Lichtwellenleiter, und diese(n) umgebauden strangförmigen Zugentlastungselementen 10, die von einem Kabelmantel (4) umhüllt sind, besteht wobei der Kabelmantel (4) unter Freigabe des mindestens einen Signalleiters (5, 6), insbesondere des Lichtwellenleiters, und den Enden (8) der strangförmigen Zugentlastungselemente (10) endseitig teilweise entfernt ist,
- mit einem Behälter (3)
-- mit einer Eintrittsöffnung (2), in die das Kabel-Endstück eingeführt ist,
-- und mit einer Austrittsöffnung (12), durch die zumindest der Signalleiter (5, 6) austritt,
- und mit in den Behälter (3) eingebrachter Vergußmasse (14), die den Signalleiter (5, 6), die Enden (8) der Zugentlastungselemente (10) und den Kabelmantel (4) umgibt,
**dadurch gekennzeichnet, daß**
ein Spreizkörper (20) unter Auffächerung der Enden (8) der Zugentlastungselemente (10) zumindest teilweise in das Kabelmantelende (21) eingeführt ist und daß der Spreizkörper (20) derart bemessen ist, daß sich der Kabelmantel (4) im Querschnitt über den Querschnitt der Eintrittsöffnung (2) hinaus aufweitet.

2. Aufnahmeanordnung nach Anspruch 1,
**dadurch gekennzeichnet, daß**
die Vergußmasse (14) ein lichtaktivierbares oder lichthärtbares Harzsystem ist.

3. Aufnahmeanordnung nach Anspruch 2,
**dadurch gekennzeichnet, daß**
der Behälter (3) aus transparentem Material besteht.

4. Aufnahmeanordnung nach Anspruch 2 oder 3,
**dadurch gekennzeichnet, daß**
der Spreizkörper (20) aus transparentem Material besteht.

5. Aufnahmeanordnung nach einem der vorangehenden Ansprüche,
**dadurch gekennzeichnet, daß**
der Spreizkörper (20) einen innen im wesentlichen ovalen Hohlquerschnitt (30) aufweist.

6. Aufnahmeanordnung nach einem der vorangehenden Ansprüche,
**dadurch gekennzeichnet, daß**
die Eintrittsöffnung (2) eine profilierte, vorzugsweise gezahnte, Innen-Kontur (32) aufweist, die sich in das Material des Kabelmantels (4) eindrückt.

7. Aufnahmeanordnung nach einem der vorangehenden Ansprüche,
**dadurch gekennzeichnet, daß**
zumindest eine in Axialrichtung (35) des Kabel-Endstücks (1) verlaufende Behälterinnenwand (38) aufgerauht und/oder profiliert ist.

8. Aufnahmeanordnung nach einem der vorangehenden Ansprüche,
**dadurch gekennzeichnet, daß**
die Eintrittsöffnung (51) von einer Knickschutztülle (52) umgeben ist, die sich von der Eintrittsöffnung (51) des Behälters (50) wegerstreckt und die die integraler Bestandteil des Behälters (50) ist.

## Claims

1. Receiving arrangement with a cable end piece (1), which consists of at least one signal conductor (5, 6), in particular an optical waveguide, and cord-like strain- or tension-relieving elements (10) surrounding the latter that are sheathed by a cable sheath (4), wherein the cable sheath (4) is partly removed on the end side thereby freeing the at least one signal conductor (5, 6), in particular the optical waveguide, and the ends (8) of the cord-like tension-relieving elements (10),
- having a container (3)
-- having an inlet opening (2) into which the cable end piece is inserted,
-- and having an outlet opening (12) through which at least the signal conductor (5, 6) emerges,
- and having a casting compound (14), which is introduced into the container (3) and which surrounds the signal conductor (5, 6), the ends (8) of the tension-relieving elements (10) and the cable sheath (4),
characterised in that
a spreading body (20) is inserted at least in part into the cable sheath end (21) fanning out the ends (8) of the tension-relieving elements (10), and in that the spreading body (20) is dimensioned in such a way that the cross section of the cable sheath (4) is widened beyond the cross section of the inlet opening (2).

2. Receiving arrangement according to claim 1, characterised in that the casting compound (14) is a resin system which can be activated by light or can be hardened by light.

3. Receiving arrangement according to claim 2, characterised in that the container (3) consists of transparent material.

4. Receiving arrangement according to claim 2 or 3, characterised in that the spreading body (20) consists of transparent material.

5. Receiving arrangement according to one of the preceding claims, characterised in that the spreading body (20) has a hollow section (30) which is substantially oval inside.

6. Receiving arrangement according to one of the preceding claims, characterised in that the inlet opening (2) has a profiled, preferably toothed, inner contour (32) which is impressed into the material of the cable sheath (4).

7. Receiving arrangement according to one of the preceding claims, characterised in that at least one inner container wall (38), which extends in an axial direction (35) of the cable end piece (1), is roughened and/or profiled.

8. Receiving arrangement according to one of the preceding claims, characterised in that the inlet opening (51) is surrounded by an anti-kink sleeve (52) which extends away from the inlet opening (51) of the container (50) and which is an integral part of the container (50).

## Revendications

1. Dispositif de réception ayant un embout (1) de câble, qui est constitué d'au moins un conducteur (5, 6) de signal, notamment d'un guide d'ondes lumineuses, et d'éléments (10) de soulagement en traction de type cordon l'entourant, qui sont entourés par une gaine (4) de câble, la gaine (4) du câble étant partiellement retirée du côté de l'extrémité, en dégageant au moins un conducteur (5, 6) de signal, notamment le guide d'ondes lumineuses, et les extrémités (8) des éléments (10) de soulagement en traction de type cordon, comportant
- un réceptacle (3)
-- un orifice d'entrée (2), dans lequel est inséré l'embout de câble,
-- un orifice de sortie (12), par lequel sort au moins le conducteur (5, 6) de signal, et
- une composition de scellement (14), qui est insérée dans le réceptacle (3) et qui entoure le conducteur (5, 6) de signal, les extrémités (8) des éléments (10) de soulagement en traction et la gaine (4) du câble,
caractérisé par le fait qu'un corps d'expansion (20) est inséré, au moins partiellement, dans l'extrémité (21) de la gaine du câble en répartissant en éventail les extrémités (8) des éléments (10) de soulagement en traction, et que le corps d'expansion (20) est dimensionné de telle sorte que la section transversale de la gaine (4) du câble s'évase au-delà de la section transversale de l'orifice d'entrée (2).

2. Dispositif de réception selon la revendication 1,
caractérisé par le fait que la composition de scellement (14) est un système résineux pouvant être activé par de la lumière ou durcissable à la lumière.

3. Dispositif de réception selon la revendication 2,
caractérisé par le fait que le réceptacle (3) est en matériau transparent.

4. Dispositif de réception selon la revendication 2 ou 3,
caractérisé par le fait que le corps d'expansion (20) est en matériau transparent.

5. Dispositif de réception selon l'une quelconque des revendications précédentes,
caractérisé par le fait que la section transversale (30) creuse du corps d'expansion (20) est sensiblement ovale.

6. Dispositif de réception selon l'une quelconque des revendications précédentes,
caractérisé par le fait que l'orifice d'entrée (2) a un contour intérieur (32) profilé, de préférence dentelé, qui s'enfonce dans le matériau de la gaine (4) du câble.

7. Dispositif de réception selon l'une quelconque des revendications précédentes,
caractérisé par le fait qu'au moins une paroi intérieure (38) du réceptacle, qui s'étend dans la direction axiale (35) de l'embout (1) de câble, est rugueuse et/ou profilée.

8. Dispositif de réception selon l'une quelconque des revendications précédentes,
caractérisé par le fait que l'orifice d'entrée (51) est entouré par une douille (52) prévenant toute inflexion, qui s'éloigne de l'orifice d'entrée (51) du réceptacle (50) et qui fait partie intégrante du réceptacle (50).
